# EUROPEAN PATENT APPLICATION

(11) **EP 3 438 032 A1**
(43) Date of publication of application: **06.02.2019**
(21) Application number: 17183991.3
(22) Date of filing: 31.07.2017
(51) Int. Cl.: B66B 1/34, B66B 5/00, G06F 8/65, G06F 21/50

(54) **METHOD FOR UPDATING SOFTWARE OF AN ELEVATOR SYSTEM AND UPDATING SYSTEM FOR UPDATING A SOFTWARE OF AN ELEVATOR SYSTEM**

(71) Applicant: Inventio AG, 6052 Hergiswil (CH)
(72) Inventor: PAICE, Andrew, 5405 Dättwil (CH)

(57) **Abstract**

A method for updating software of an elevator system (20) is proposed, wherein the method comprises the following steps: adapting and/or configuring a new version of the software specifically for the elevator system (20); downloading the new version of the software, which has been adapted and/or configured specifically for the elevator system (20), onto a portable update device (30); connecting the portable update device (30) with the elevator system (20); verifying that the new version of the software on the portable update device (30) is software designated for the elevator system (20) via verification means of the portable update device (30); and updating the software of the elevator system (20) from an old version of the software to the new version of the software via the portable update device (30).

## Description

### Specification

The present invention pertains to a method for updating software of an elevator system and an updating system for updating a software of an elevator system.

The software of elevator system has to be updated from time to time. Typically, the software is specifically adapted/configured for the respective elevator system. If the software is not correctly adapted/configured for the respective elevator system, the elevator system does not work properly or in an optimal way. Ideally, the software is updated by remote maintenance, i.e., without a person coming physically to the elevator system. However, if the elevator system has no connection to a gateway/software update center (or only a connection with a narrow bandwidth), an update via remote maintenance is not possible. According to the state of the art, a technician brings a template of the new software (i.e., general software) and adapts/configures a new version of the software specifically for the elevator system based on the template of the new software at the elevator system. Thus, the technician has be to very experienced. Furthermore, it takes a long time at the elevator system for the technician to update the elevator system. This increases the costs for an update.

There can be the need for a method for updating software of an elevator system which is technically simple and which can be carried out fast at the elevator system. Furthermore, there can be the need for an updating system for updating a software of an elevator system which allows to update the software of an elevator system technically simple and in a short amount of time.

Such a need may be met by a method for updating software of an elevator system and by an updating system for updating a software of an elevator system according to the independent claims. Advantageous embodiments are defined in the dependent claims.

According to a first aspect, a method for updating software of an elevator system is proposed, wherein the method comprises the following steps: adapting and/or configuring a new version of the software specifically for the elevator system; downloading the new version of the software, which has been adapted and/or configured specifically for the elevator system, onto a portable update device; connecting the portable update device with the elevator system; verifying that the new version of the software on the portable update device is software designated for the elevator system via verification means of the portable update device; and updating the software of the elevator system from an old version of the software to the new version of the software via the portable update device.

One advantage hereof is that the method is technically simple, in general. In addition, elevator systems which do not have a gateway/connection to a software center can be updated very efficiently, typically. Furthermore, normally, the person connecting the portable update device to the elevator system and/or starting the update process does not have to a very experienced technician, since the new version of the software is verified automatically. Also, generally, the update of the software does not take very long, i.e., the person does not have to spend much time at the elevator system, since the software has been configured/adapted specifically to the elevator system before. Typically, this decreases the costs. Furthermore, in general, the risk that a new version of the software which is not specifically adapted/configured for the elevator system (i.e., the wrong software) is updated/installed at the elevator system is minimized. Usually, the steps are carried out in the listed order.

According to a second aspect, an updating system for updating a software of an elevator system is proposed, wherein the system comprises: a portable update device which is connectable to the elevator system, wherein the portable update device is adapted for storing a new version of the software, wherein the new version of the software is specifically adapted for the elevator system; a download device for downloading the new version of the software onto the portable update device, wherein the portable update device is connectable to the download device, and wherein the portable update device comprises verification means, in particular software verification means, for verifying that the new version of the software on the portable update device is software designated for the elevator system, when the portable update device is connected to the elevator system; and wherein the portable update device is adapted to update the elevator system with the new version of the software when the verifying that the new version of the software on the portable update device is the new version of the software designated for the elevator system has been successful.

Typically, one advantage hereof is that that the software of the elevator system can be updated technically simple. In general, the person only has to connect the portable update device with the elevator system. Normally, the person does not have to adapt/configure the new version of the software at the elevator system. Normally, the update with the portable update device can be carried out in a short amount of time. Typically, this decreases the costs. Also, in general, installing software which is not specifically designated for the elevator system is prevented. Generally, this increases the security of the update process.

Possible features and advantageous effects of the embodiments of the invention can inter alia and without constricting the invention be based on the ideas and findings described in the following.

According to an embodiment, the verifying that the new version of the software is software designated for the elevator system is carried out using position information of the portable update device when the portable update device is connected to the elevator and location information of the elevator system. In general, a matching or near matching of the position of the portable update device and the location of the elevator system can be carried out. Usually, if these two match or nearly match, the verifying is deemed successful. Generally, the location of the elevator can be stored on the portable update device, in the elevator system and/or in a database, e.g., in a (central) database at a maintenance center. Typically, by this, the verification that the software is the software designated for the elevator system can be technically simple. In general, this increases the reliability of the update. Usually, the location information can be GPS-information, information based on wireless local area networks (WLANs) which signals/SSIDs can be received by the portable update device and/or further information.

According to an embodiment, the new version of the software is downloaded onto the portable update device before the portable update device is moved and/or connected to the elevator system. Typically, one advantage hereof is that the time period which the portable update device has to be at/near the elevator system and/or connected to the elevator system is further reduced. Usually, in particular, the quality of a connection (via cable and/or wireless) to a software center can be of bad quality at the elevator system. Generally, by downloading the software before, the quality of the connection at the elevator system is of no relevance. Furthermore, typically, this saves time and decreases the costs.

According to an embodiment, the method further comprises the following step: saving the old version of the software in the elevator system. Generally, one advantage hereof is that, if problems with the new version of the software updated/installed at the elevator system occur, a reversion to the previous/old version of the software can be done quickly and simply.

According to an embodiment, the verifying that the new version of the software is software designated for the elevator system is carried out by using a working time schedule of a person transporting the portable update device to the elevator system. By this, in general, the verification that the correct software is installed and/or the correct software version is chosen to be installed is based on time information and on a schedule, which indicates at what points of time the person transporting the portable update device is scheduled to be at the elevator system. Typically, this increases the reliability that the correct software is installed at the elevator system.

According to an embodiment, the download device is a portable device. By this, usually, the download can be carried out while the download device is carried by/at a person, e.g., a technician, away from the software center. Usually, in particular, the software can be downloaded automatically to the portable update device in the night before the portable update device is transported and connected to the elevator system for carrying out the software update. Typically, this further decreases the amount of time needed for the update at the elevator system.

According to an embodiment, the portable update device comprises locating means for locating the position of the portable update device, when the portable update device is connected to the elevator system, and wherein the verifying means are adapted for verifying that the new version of the software on the portable update device is software designated for the elevator system based on position data of the portable update device from the locating means and stored location data of the elevator. Typically, by this, the verification that the software is software designated/adapted/configured for the elevator system can be technically simple. Generally, this increases the reliability of the update. Typically, the location information can be GPS-information, information based on wireless local area networks (WLANs) which signals/SSIDs can be received by portable update device and/or further information. Usually, the stored location data of the elevator can be stored on the portable update device, in the elevator system and/or in a database, e.g., in a (central) database at a maintenance center.

According to an embodiment, the updating system further comprises a configuration device for configuring the new version of the software specifically for the elevator system. Typically, by this, the software can be configured technically easily.

It has to be noted that some of the possible features and advantageous effects of the invention are described herein in connection with different embodiments. A person skilled in the art understands that the features can be combined, adapted or exchanged appropriately to arrive at further embodiments of the invention.

In the following, embodiments of the invention are described with reference to the attached drawings, wherein neither the drawings nor the specification of the invention should be interpreted as constricting the invention.
- Fig. 1 shows: a schematic view of a first embodiment of an updating system for updating a software of an elevator system according to the invention when the portable update device is connected to the download device; and
- Fig. 2 shows: a schematic view of a first embodiment of an updating system for updating a software of an elevator system according to the invention, when the portable update device is connected to the elevator system.

The figures are only schematic and not to scale. Same reference signs denote the same features or features with the same functions in the various figures.

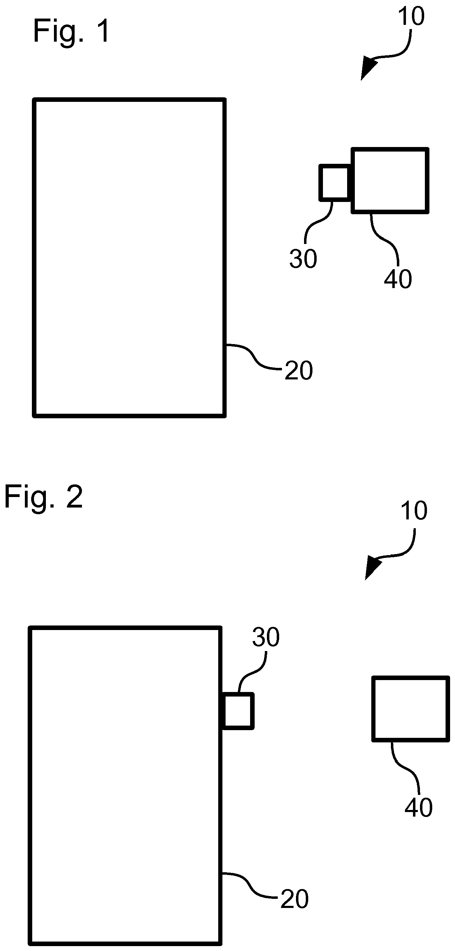

Fig. 1 shows a schematic view of a first embodiment of an updating system 10 for updating a software of an elevator system 20 according to the invention when the portable update device 30 is connected to the download device 40. Fig. 2 shows a schematic view of a first embodiment of an updating system 10 for updating a software of an elevator system 20 according to the invention, when the portable update device 30 is connected to the elevator system 20.

The elevator system 20 comprises an elevator and a control unit for controlling the elevator. The control unit uses software which is specifically adapted/configured for the elevator system. The software does not work properly with other (different) elevator systems. The software already present at the elevator system 20 is called the old version of the software. The software to be installed is called the new version of the software. The old and new versions of the software can be vastly different and do not have to be versions of the same software per se.

The updating system 10 comprises a portable update device 30 and a download device 40. The portable update device 30 is adapted for storing software. The portable update device 30 can comprise non-volatile storage. The portable device can be a memory card, in particular a MMS-card or a SD-card, a mobile phone, a tablet, a notebook/laptop etc. The portable device is connectable to the elevator system 20. This can be carried out via cable and/or a wireless connection. Alternatively, the portable device can be inserted into the elevator system 20, in particular if the portable update device 30 is memory card, for connecting the portable update device 30 with the elevator system 20.

The download device 40 downloads the new version of the software onto the portable update device 30. The software can be downloaded from a software center, where the software for the elevator systems 20 are stored. A configuration device of the download device 40 and/or the software center adapts/configures the new version of the software specifically for a/the elevator system 20. Hereby, different hardware and/or software components of the elevator systems 20 (memory size, CPU capabilities, number of floors, type of elevator cabin, type of suspension traction means for holding and moving the elevator cabin and/or type of building in which the elevator system 20 is located etc.) are considered. The download device 40 prepares the portable update device 30 such that the portable update device 30 has only to be connected with the elevator system 20. No further configuring of the software on the portable update device 30 is necessary, after the configuration device has adapted/configured the software specifically for the elevator system 20.

It is possible that the person downloading the new version of the software which has been adapted and/or configured specifically for the elevator system has to authenticate himself or herself before the person can download the new version of the software onto the portable update device 30. In particular, it is possible that the person has to authenticate himself or herself as a field technician. The authentication and/or the identity of the person can also be used for selecting the new version of the software (which has been adapted and/or configure specifically for an elevator system) which should be installed by the person. Furthermore, it is possible that the software version is adapted and/or configured for a specific elevator system via/based on the authentication, wherein after the person authenticates himself or herself, the updating system 10 identifies the elevator system whereto the person will go next based on a database or a work schedule and adapts and/or configures a new version of the software for the elevator system whereto the person goes next.

The download device 40 can be a portable device. The download device 40 can be part of the portable update device 30. The download of the new version of the software can occur before the portable update device 30 is at or near (e.g., less than 500 m or less than 100 m or less than 50 m) the elevator system 20 which software is to be updated. The download can occur in the night before the technician is scheduled to carry out the update at the elevator system 20, i.e., the night before the technician moves the portable update device 30 to the elevator system 20. Also, the download of the software onto the portable update device 30 can occur while the technician is on his/her way to the elevator system 20. The latter can be determined based on routing data from a GPS device. The routing data or a time schedule can also be used for identifying the software to download onto the portable update device 30.

More than one software can be stored in the portable update device 30 simultaneously. E.g., the new versions of software for different elevator systems 20 can be stored in the portable update device 30 at the same time.

The portable update device 30 is moved to the elevator system 20 and is connected to the elevator system 20. Verifying means of the portable update device 30, e.g., software on the portable update device 30 which is carried out on the portable update device 30 and/or on the elevator system 20. The verifying means authenticates and/or identifies the correct version of the software for the elevator system 20 which is stored on the portable update device 30 (if there is more than one software on the portable update device 30). The correct version of the software is the software stored on the portable update device 30 which has been specifically/specially adapted/configured for the (respective) elevator system 20. This authentication/identifying can be carried out based on positon information of the portable update device 30.

It is possible that the person has to authenticate himself or herself before the person can connect the portable update device 30 to the elevator system 20 and/or before the person can carry out the update of the elevator system 20 with the new version of the software. The authentication can be carried out via hardware (e.g., a dongle, a key etc.) and/or via software (secret key etc.) and/or secret knowledge (user name and password). In particular, it is possible that the person has to authenticate himself or herself as a field technician.

The position information can comprise GPS-data and/or which wireless signals from wireless local area networks can be received by the portable update device 30, in particular the SSIDs and the strengths of the different wireless local networks. The position information is matched with location information of the elevator system 20. The location information of the elevator system 20 can be stored in a database. The database can store and/or comprise location information of several elevator systems 20. This way, the elevator can be identified and it can be verified if the software on the portable update device 30 or which software on the portable update device 30 is the software which shall be installed at the elevator system 20 (so-called software designated for the elevator system 20). I.e., a matching between the elevator system 20 and the software on the portable update device 30 can be carried out.

Additionally or alternatively, the verification/authentication is carried out based on a time schedule of the person who transports the portable update device 30 and who connects the portable update device 30 to the elevator system 20. E.g., the person is a technician visiting several elevator systems 20 on a specific day or visiting several elevator systems 20 on different days, the correct version of the software can be identified/authenticated based on the information of the present time and the time schedule, i.e., at which elevator system 20 the person should be according to the time schedule. The time schedule can be stored in the portable update device 30 and/or in a central server to which the portable update device 30 connects to.

This way, the person which connects the portable update device 30 to the elevator system 20 does not have to carry out an adaption/configuration of the software and does not have identify/choose the new version of software to be installed. The person does not have to be an expert technician and does not need to have special knowledge about the update process. This increases the reliability of the software update.

Further authenticating means are possible, e.g., a specific naming of the new version of the software on the portable update device 30, which indicates clearly and unambiguously for which elevator system 20 the new version of the software is designated. The software is designated for that elevator system 20 for which the new version of the software has been specifically adapted and/or configured.

The old version of the software can be stored in a non-volatile memory at the elevator system 20, e.g., on a SD-card and/or a MMC-card and/or a hard-drive, and/or on the portable update device 30. This way, if the new version of the software does not work properly after the installation/update, a reversion to the old version of the software can be carried out simply.

The update can be carried out automatically after connecting the portable update device 30 to the elevator system 20. It is also possible that the person needs to authenticate himself as a person authorized to service the elevator system 20 and/or to carry out updates of the software of the elevator.

The update process replaces the old version of the software in the elevator system 20 with the new version of the software, either partially or fully.

The portable update device 30 can display information on the portable update device 30 or at the elevator system 20 which steps the person has to carry out manually, e.g., authenticating himself/herself to the elevator system 20 as a technician.

After the update of the software of the elevator system 20 from the old version of the software to the new version of the software, a test of the elevator system 20 is carried out. The test of the elevator system 20 can be started automatically after the update. Alternatively, the test of the elevator system 20 can be started by the person which connected the portable update device 30 to the elevator system 20 and/or started the update. The test can comprise a self-test of the elevator system 20. Furthermore, the test can comprise a test which checks if the elevator system 20 runs/operates normally and fully with the new version of the software. In particular, it can be tested if the elevator system 20 fulfils routine checks.

After the update, the portable device can be disconnected from the elevator system 20. The person can leave the location of the elevator system 20 and can go to the next elevator system 20.

Concluding, it has to be noted that terms like "having", "comprising" etc. do not exclude other elements or steps and that terms like "a" or "one" do not exclude a plurality. Furthermore, it shall be noted that features or steps which are described with reference to one of the embodiments above can be used in combination with other features or steps of other embodiments described above. Reference signs in the claims should not be considered to be constricting.

### List of reference signs:

- 10: updating system
- 20: elevator system
- 30: portable update device
- 40: download device

## Claims

1. Method for updating software of an elevator system (20), wherein the method comprises the following steps:
adapting and/or configuring a new version of the software specifically for the elevator system (20);
downloading the new version of the software, which has been adapted and/or configured specifically for the elevator system (20), onto a portable update device (30);
connecting the portable update device (30) with the elevator system (20);
verifying that the new version of the software on the portable update device (30) is software designated for the elevator system (20) via verification means of the portable update device (30); and
updating the software of the elevator system (20) from an old version of the software to the new version of the software via the portable update device (30).

2. Method according to claim 1, wherein
the verifying that the new version of the software is software designated for the elevator system (20) is carried out using position information of the portable update device (30) when the portable update device (30) is connected to the elevator and location information of the elevator system (20).

3. Method according to claim 1 or 2, wherein
the new version of the software is downloaded onto the portable update device (30) before the portable update device (30) is moved and/or connected to the elevator system (20).

4. Method according to one of the preceding claims, further comprising the following step:
saving the old version of the software in the elevator system (20).

5. Method according to one of the preceding claims, wherein
the verifying that the new version of the software is software designated for the elevator system (20) is carried out by using a working time schedule of a person transporting the portable update device (30) to the elevator system (20).

6. Updating system (10) for updating a software of an elevator system (20), wherein the system comprises:
a portable update device (30) which is connectable to the elevator system (20),
wherein the portable update device (30) is adapted for storing a new version of the software, wherein the new version of the software is specifically adapted for the elevator system (20);
a download device (40) for downloading the new version of the software onto the portable update device (30),
wherein the portable update device (30) is connectable to the download device (40), and wherein the portable update device (30) comprises verification means, in particular software verification means, for verifying that the new version of the software on the portable update device (30) is software designated for the elevator system (20), when the portable update device (30) is connected to the elevator system (20); and
wherein the portable update device (30) is adapted to update the elevator system (20) with the new version of the software when the verifying that the new version of the software on the portable update device (30) is the new version of the software designated for the elevator system (20) has been successful.

7. Updating system (10) according to claim 6, wherein
the download device (40) is a portable device.

8. Updating system (10) according to claim 6 or 7, wherein
the portable update device (30) comprises locating means for locating the position of the portable update device (30), when the portable update device (30) is connected to the elevator system (20), and wherein the verifying means are adapted for verifying that the new version of the software on the portable update device (30) is software designated for the elevator system (20) based on position data of the portable update device (30) from the locating means and stored location data of the elevator.

9. Updating system (10) according to one of the claims 6-8, further comprising a configuration device for configuring the new version of the software specifically for the elevator system (20).
